# EUROPEAN PATENT APPLICATION

(11) **EP 0 834 660 A2**
(43) Date of publication of application: **08.04.1998**
(21) Application number: 97116852.1
(22) Date of filing: 29.09.1997
(51) Int. Cl.: F16B 13/12

(54) **Anchor device**

(30) Priority: 02.10.1996 IT MI962018
(71) Applicant: Spinelli S.r.l., 23893 Cassago Brianza, (LC) (IT)
(72) Inventor: Spinelli, Massimo, 23893 Cassago Brianza (LC) (IT)
(74) Representative: Marietti, Giuseppe

(57) **Abstract**

An anchor device which may be inserted in a hole of a piece so as to block a stay-rod in said hole or on a surface opposite to the insertion opening of said hole, comprising a stay-rod, restraining elements operating on the hole and anchoring elements comprising at least two pairs of segments, each of which pair is composed of a first and a second segment which are connected to one another in an articulated manner and the free ends of which have an articulated connection with supports which can be drawn closer together or further apart by means of the stay-rod.

## Description

The present invention concerns an anchor device which can be inserted in a hole of a piece so as to connect at least one element to said piece. The anchor device can be applied in any type of wall, floor, concrete slab or the like, independently of its nature and of the sort of material used in its construction. Moreover, the anchor device may also be used as a screw anchor.

The first type of known anchor is composed of a rubber sheath which surrounds a screw. The screw is blocked at one end by a nut. When the anchor is inserted into the hole, there is attrition between the rubber and the walls of the hole, preventing the rubber from rotating while the screw is being screwed in. Therefore, while the screw is being screwed in, the nut is drawn in the direction of the screw head, compressing the rubber and causing it to expand against the walls of the hole. Although this solution is widely used in the technical field, it has the disadvantage that it is less effective when the material to be drilled is not uninterrupted since in this case, the rubber outer sheath is not in perfect contact with the inside of the hole, thus reducing the attrition surface. Furthermore, such anchors necessitate holes whose diameter is basically equal to and not greater than that of the rubber sheath.

A second type of anchors consists of a plastic element with a hole into which a wooden screw is inserted. The element has an opening along its longitudinal axis which divides it into two connected parts and, on the outside, it has two fins and a plurality of reliefs. When the screw is inserted into the hole, the space between the two parts widens thus promoting the grip of the anchor. However, this type of anchor does allow much regulation of the projection of the screw and this fact limits its use to only certain dimensions of the materials to be connected.

Moreover, the anchors used in the known technical field generally have a limited capacity, not being able to withstand heavy loads.

An object of this invention is to solve the above mentioned problems by means of an anchor device which can be used in holes of different dimensions, or even in holes where there is limited contact between the inner surface of the hole and the outer surface of the screw anchor.

Another object is to create a screw anchor which may be used to connect materials of different thicknesses.

A further object of the invention is to create a screw anchor which can be used to sustain weights to be lifted, boats, trailers, etc.

These objects are achieved by means of the invention, which relates to an anchor device suitable for insertion in a hole made in a piece in order to block a stay-rod in said hole or on a surface opposite the anchor insertion opening of said hole, the element consisting of a stay-rod, restraining elements at the hole or near same, and anchor components, characterised in that said anchor components are in the form of at least two segment pairs, each of said segment pairs being composed of a first segment and a second segment with an articulated connection between the two segments, and the free ends of which have an articulated connection with supports which can be drawn closer together or further apart by means of said stay-rod.

According to a preferred embodiment of the present invention, the anchor supports are composed of sleeves, at least one of which can be fixed to the stay-rod, at least during the opening movement of the articulated segments.

According to another preferred embodiment of the present invention, the segments of each pairs which are located far from the free end of the stay-rod, are longer than the other segments, so as to allow the saty-rod and each pairs of segments to form a right-angled triangle in which the first segment is the hypotenuse.

According to another preferred embodiment of the present invention, the anchor device, which consists of a screw anchor, is characterised by the fact that the stay-rod is composed of a screw, and a first of the two sleeves is threaded and fitted to said screw, while the second sleeve is free to move along the length of said screw and is controlled by a lock nut fitted to said screw in its movement relating to the first sleeve.

The anchor device according to the present invention first of all offers the advantage that it can be applied to holes with a greater or even far greater diameter than that of the anchor components in their closed position. A second advantage arises from the possibility of opening the anchor device completely in order to create quickly a contact, even when using holes that are much shorter than the length of the element in the closed position. Furthermore, the anchor device, when in the form of a screw anchor, can easily block materials of greatly varying thicknesses. The anchor device, as long as the materials and dimensions used are appropriate, can be used to sustain weights to be lifted, boats, trailers and the like. Furthermore, the element can also be used in holes which are not cylindrical in shape. Finally, the movement range of the screw in the screw anchor may be adjusted precisely and adapted to the application requirements. Further advantages and features of the invention will be evident from the subsequent description, which is intended to be explanatory but by no means exhaustive, with reference to the schematic drawings herewith enclosed, in which:
- figure 1 is an exploded side view of the anchor device according to the present invention;
- figure 2 is a side view of the element of figure 1;
- figures 3.a, 3.b and 3.c illustrate a possible application of the anchor device according to the invention;
- figure 4 shows a different application of the anchor device according to the invention;
- figure 5 shows another application of the anchor device according to the invention;
- figures 6.a and 6.b show a further application of the anchor device according to the invention; and
- figure 7 shows another possible application of the anchor device according to the invention.

The anchor device 1 according to the present invention comprises a set of anchor components, preferably in the form a deformable external shell 20, as well as a screw 12. As will be explained in greater detail below, said shell 20 can be deformed in a controlled manner and the movement range of said screw 12 can be adjusted at will to block the element 1 in different application conditions.

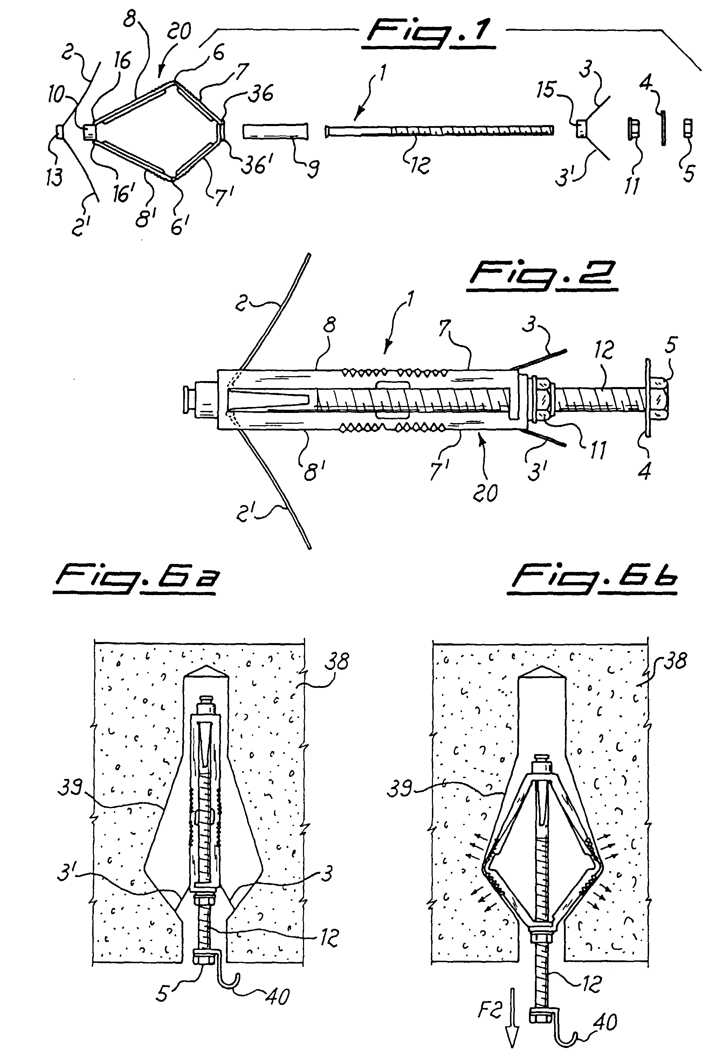

Figure 1 shows an exploded view of the anchor device 1 acting as a screw anchor, comprising a deformable external shell 20, in its turn comprising a first pairs of segments 7 and 8 and a second pairs of segments 7' and 8'. At the front of the shell 20, that is on the side of segments 8 and 8', there is a threaded sleeve 10, inside of which a screw 12, fitted with a nut 5 and a washer 4, may be inserted. On the inside of the threaded sleeve 10, there is a circular space, within which a first metal ring 13 is positioned fitted with a first pair of lateral fins 2 and 2'. At the other end of the screw, there is a second ring 15, similar to said ring 13, fitted with a second pair of lateral fins 3 and 3'. At the rear of the shell 20, that is on the side of segments 7 and 7', there is a self-locking nut 11 which can run axially along the screw 12 until it finally reaches a position determined by an inner spacer 9. The shell 20 is opened by an rotation of the screw 12 and the pressure exerted by the self-locking nut 11. To this and hinges 16 and 16'are provided for at the point where segments 8 and 8' are attached to the sleeve 10, as well as hinges 36 and 36' which allow segments 7 and 7' to rotate.

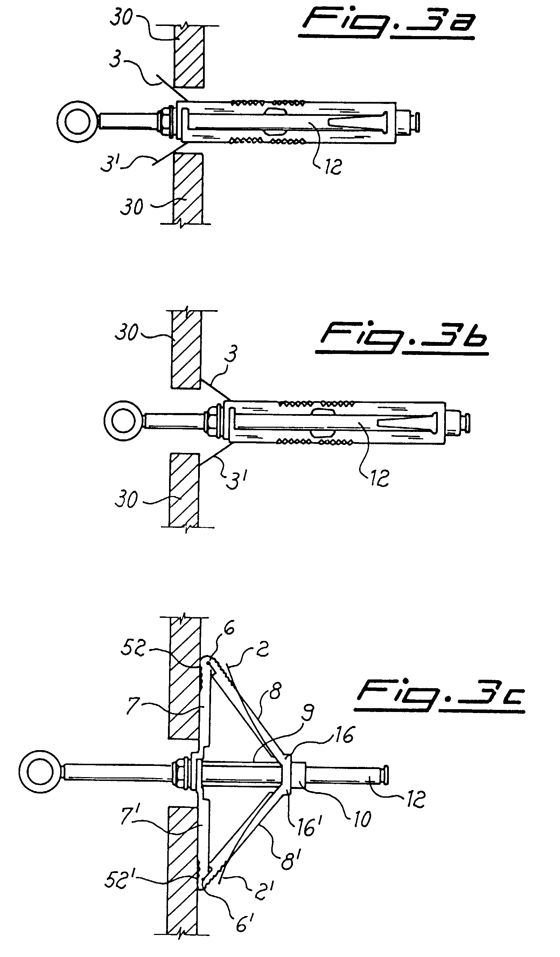

Figure 2 shows a screw anchor 1 with the shell 20 in the closed position. The deformation of the shell 20 can be adjusted as desired to any point between the closed position and the maximum open position. In the maximum open position, the spacer 9 supports the load on the screw anchor 1. The fins 2 and 2' and the fins 3 and 3' act to prevent the screw anchor from rotating inside the hole into whie self-locking nut 11. It is for this reason that there are hinges 16 and 16' at the point where segments 8 and 8' are attached to the sleeve 10 and hinges 36 and 36' which allow segments 7 and 7' to rotate.

Figure 2 shows screw anchor 1 with the sleeve 20 in the closed position. The deformation of the sleeve 20 can be adjusted as desired to any point it has been inserted. Furthermore, as will become apparent from the description of the applications, when the shell is open or partially open, the screw 12 can be made to move up and down in relation to the shell 20.

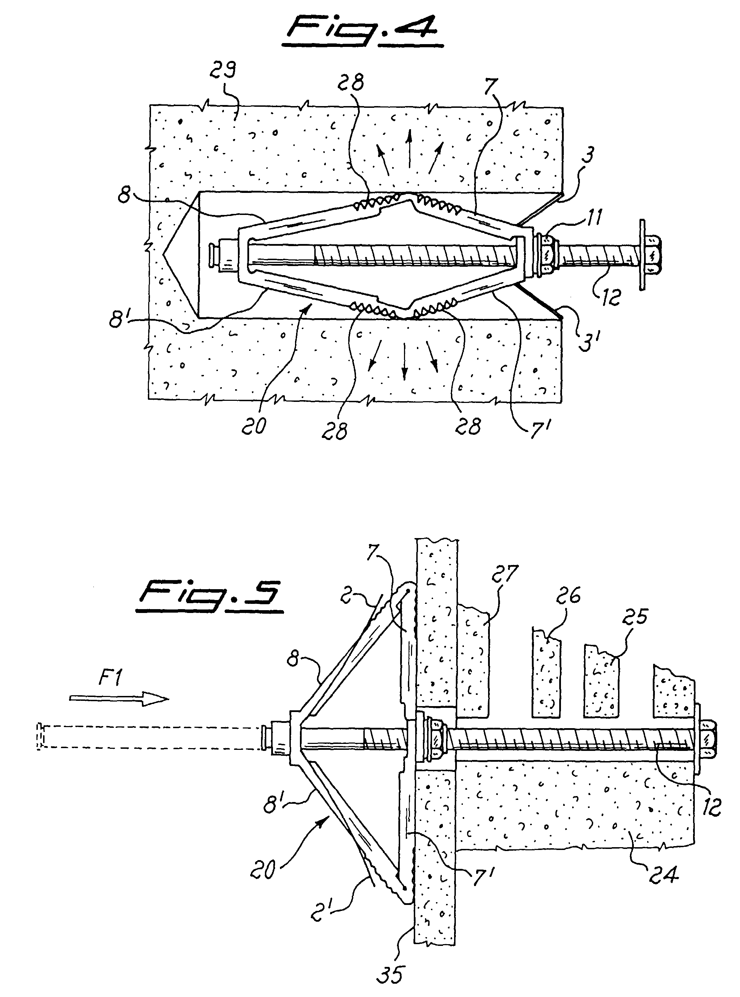

Figures 3.a, 3.b and 3.c show a first possible application of screw anchor 1. In particular, in figure 3.a the screw anchor 1 is inserted into a hole made in a material 30 the diameter of which is greater than that of screw anchor 1 in its closed position. Once the screw anchor has been fully inserted, as in figure 3.b, the fins 3 and 3' block the rotation of the screw anchor and permit the shell 20 to open. In figure 3.c, the screw anchor 1 is shown fully open and blocked, which is achieved thanks to the action of the spacer 9. The spacer 9 has a double function: firstly, while the element 1 is being opened, it keeps the segments 7 and 8 and 7' and 8' slightly off axis in order to facilitate the opening of the element 1. Secondly, the spacer 9 determines the fully open position of element 1 and fits into the hinges 16 and 16' in order to lock element 1 in position. Furthermore, the axial position of the screw 12 can be adjusted as required without modifying the conditions of the screw anchor. Figure 3.c also shows that segments 7 and 7' are shorter than segments 8 and 8', in order to form a support triangle for element 1. Moreover, segments 8 and 8' act as support bits for segments 7 and 7' at points 52 and 52'.

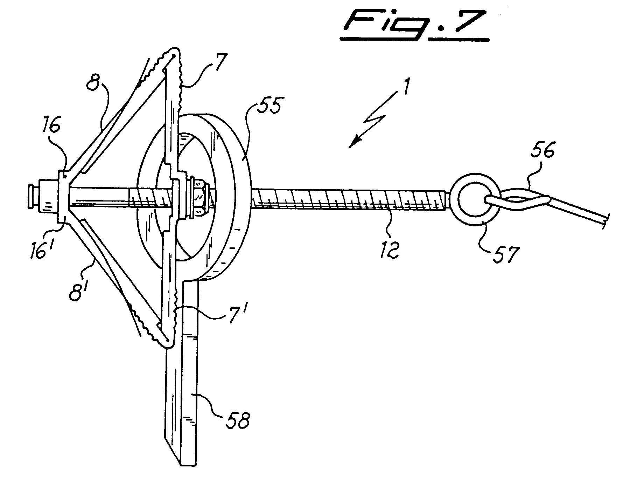

Figure 4 shows a different application of screw anchor 1. Here the screw anchor 1 is inserted into a hole which has a diameter greater than the screw anchor 1 which has been made in a material 29, for example reinforced concrete. In this case too, the fins 2 and 2' and 3 and 3' make certain that the screw anchor will not rotate inside the hole. Subsequently, thanks to the relative movement between the screw 12 and the nut 11, the shell 20 expands until the segments 8 and 8' and 7 and 7' get a grip on the inner surface of the hole, locking the screw anchor 1 in position. The reliefs 28 on the above mentioned segments forming the shell 20 serve to increase the grip of the screw anchor on the inside of the hole.

Figure 5 shows the screw anchor 1 in another possible application. In this case, the screw anchor is inserted into a hole made in a material 35 and is used in such a manner that the shell 20 is completely deformed so that segments 7 and 7' ensure a perfect hold as they adhere to the material 35. The screw 12 can therefore be moved in the direction of the arrow F1 depending on the thickness of the material to be locked. Figure 5 shows varying thicknesses marked with the numbers 27, 26, 25 and 24, in order to provide some by no means exhaustive examples of the materials which can be blocked using the screw anchor according to the invention.

Figures 6.a and 6.b show a further application of the screw anchor according to the invention. Here the screw anchor 1 is inserted into a hole 39 which is not cylindrical in shape and has been made in the material 38. The fins 3 and 3' hold the screw anchor 1 in position and make it possible to open the shell 20, which, as can be seen from figure 6.b, when it is subjected to a load in the direction of the arrow F2, and attached to the hook 40, becomes deformed in such a way as to adhere to the shape of the hole 39. Here too, it is possible to adjust the position of the screw 12 so as to ensure that the load supported by the screw anchor 1 is applied at the desired distance from the opening of the hole into which the screw anchor has been inserted.

Figure 7 illustrates a further application of the screw anchor 1 according to the present invention. The element 1 can be used for mooring a boat or the like to a pier. In this case, it is preferable if element 1 is fitted with a ring 57 to which a rope 56 holding the boat may be attached. The element 1 is inserted in the closed position into a ring 55, which is permanently fixed to the surface of a pier (not shown in figure 7), and subsequently opened in such a way that the elements 7 and 7' come into contact with the ring 55 and possibly with part of its support 58. If necessary, a plurality of elements 1 may be attached to a plurality of rings 55 in order to moor a boat.

The screw anchor 1 according to the present invention may also be profitably used in the following ways which are not illustrated in the drawings attached to the present specification.

First of all, it can be used in a similar manner to the screw anchor already known in the technical field, inserted into a hole with more or less the same diameter as the shell in the closed position.

Secondly, the screw anchor 1 can be used in a non-cylindrical hole, for example, a hole formed by the a first and a second part of conical surfaces.

Thirdly, the screw anchor 1 can be used with a hollow flat block, in a hole made with a normal drill and the screw anchor is sure to hold as a consequence of the partial or complete deformation of the shell 20.

Moreover, the screw anchor 1 can be used with the shell completely deformed, in order to reinforce a wall at the point where the screw anchor 1 is fitted, by placing a material such as polyurethane, cement, etc., between the segments 7 and 7' and the wall.

Furthermore, in certain cases, the fins 2 and 2' can get a grip on the walls of a brick, even inside a hole much larger than the diameter of the shell 20 in the closed position, in order to prevent the rotation of the screw anchor 1 during the installation.

Finally, the screw anchor 1 can be used, if necessary together with a hook or a grommet, with a rope for attaching and lifting materials.

The segments 7 and 7' and 8 and 8' can be made from any of the suitable materials known, choosing the most appropriate for the desired application and without limiting the dimensions of the anchor device 1.

## Claims

1. An anchor device suitable for insertion in a hole made in a piece in order to block a stay-rod in said hole or on a surface opposite the insertion opening of said hole, the element consisting of a stay-rod, restraining elements at said hole or near same, and anchor components, characterised in that said anchor components are in the form of at least two segment pairs, each of said pairs being composed of a first segment and a second segment with an articulated connection between the same, and the free ends of which have an articulated connection with supports, which can be drawn closer together or further apart by means of said stay-rod.

2. An anchor device according to claim 1, wherein said restraining elements are in the form of at least one pair of flexible fins fixed to at least one of the articulated segments.

3. An anchor device according to claim 2, wherein said flexible fins are attached at least to the support nearest the stay-rod end which is opposite the anchor device.

4. An anchor device according to claims 1, 2 or 3, wherein the supports of the anchor devices are in the form of sleeves, at least one of which can be restrained by said stay-rod, at least during opening movement of the articulated segments.

5. An anchor device according to any of the above claims, wherein the segments of each pair located farthest from the stay-rod free end are longer than the other segments, so that each pair of segments can form a right-angled triangle wherein the first segment is the hypotenuse.

6. An anchor device according to one of the above preceding claims in the form of a screw anchor, wherein the stay-rod is a screw, the first of the sleeves is threaded and in contact with said screw, while the second sleeve is free to move along said screw and is regulated in its movement towards the first sleeve by a self-locking nut screwed onto said screw.

7. An anchor according to claim 6, wherein the threaded sleeve is located at the end of the anchor opposite the end where the screw is screwed in.

8. An anchor according to claims 6 or 7, wherein at least part of said segments press, when the anchor is open, against the walls of the hole and/or a surface behind the hole itself.

9. A screw anchor according to any of the preceding claims, wherein a blocking element is provided for to stop the deformation of said articulated segments in a predetermined position.
